# EUROPÄISCHE PATENTSCHRIFT

(11) **EP 3 898 393 B1**
(45) Veröffentlichungstag und Bekanntmachung des Hinweises auf die Patenterteilung: **03.12.2025**
(21) Anmeldenummer: 19842861.7
(22) Anmeldetag: 12.12.2019
(51) Int. Cl.: B62H 3/00, B60L 53/65, B62H 5/00

(54) **DIEBSTAHLSICHERUNGSANORDNUNG**
ANTI-THEFT ASSEMBLY
SYSTÈME DE SÉCURITÉ ANTIVOL

(30) Priorität: 19.12.2018 DE 102018009866
(43) Veröffentlichungstag der Anmeldung: 27.10.2021
(73) Patentinhaber: nextbike GmbH, 04229 Leipzig (DE)
(72) Erfinder: KALUPNER, Ralf, 04229 Leipzig (DE); KIRCHER, Clemens, 04229 Leipzig (DE); VOCKEROTH, Johannes, 04229 Leipzig (DE)
(74) Vertreter: Weihrauch, Frank
(86) Internationale Anmeldenummer: PCT/DE2019/000323
(87) Internationale Veröffentlichungsnummer: WO 2020/125834

(56) Entgegenhaltungen:
- EP-A1- 2 090 501
- EP-A1- 2 332 811
- EP-A1- 3 288 821
- KR-A- 20110 083 763
- TW-U- M 553 854

## Beschreibung

Die Erfindung betrifft eine Diebstahlsicherungsanordnung für ein Fahrrad, insbesondere für ein Fahrrad eines Fahrradverleihsystems.

Aus dem Stand der Technik sind verschiedene Lösungen zur Sicherung von Fahrrädern gegen Diebstahl bekannt.

Es sind zum einem Rahmenschlösser bekannt, welche am Rahmen des Fahrrads angebracht sind und beim Verriegeln die Radrotation blockieren. Der Nachteil ist, dass so verriegelte Fahrräder noch weggetragen werden können.

Eine andere Lösung besteht darin, ein Wegtragen durch ein Festschließen des Fahrrads an ortsfeste Gegenstände wie Straßenschilder oder Lichtmasten mit einem Spangen-, Kabel- oder Kettenschloss zu verhindern. Für professionelle Fahrradverleihsysteme sind auch spezielle ortsfeste Fahrradständer bekannt, die als Stationen dienen und in der Lage sind, Fahrräder festzuschließen und an berechtigte Nutzer freizugeben.

In der EP 2 090 501 A1 wird ein Fahrradsicherungssystem, bestehend aus einer Fahrradstation und mindestens einem Fahrrad beschrieben, bei dem Andockmittel für eine Verriegelung des Fahrrads an der Fahrradstation vorgesehen sind. Die Fahrradstation weist ein Nutzerkommunikationsterminal zur Authentifizierung und zur Steuerung des Andockmittels Dieses Dokument offenbart die Merkmale der Präambel des Anspruchs 1**.**

Gemäß EP 2 332 811 A1 wird eine Sicherung eines Fahrrads in der Weise vorgeschlagen, dass eine Fahrradstütze in einer Stützposition arretierbar ist und in dieser Stellung eine Verwendung des Fahrrads verhindert.

Ferner beschreibt die KR 2011 0083 763 A eine Vorrichtung und ein Verfahren zum Abstellen eines Fahrrads unter Verwendung einer Sekundärverriegelungsvorrichtung, die an das zurückzugebende Fahrrad angeschlossen wird, um die Rückgabe zu erleichtern.

Weiterhin beschreibt TW M 553 854 U ein Fahrrad-Mietsystem, bei dem das Fahrrad mit einer Steuervorrichtung und einem Rahmenschlosskörper ausgestattet ist, der eine Ankopplung an einer festen Parksäule vorsieht.

Aufgabe der Erfindung ist es eine Anordnung anzugeben, die eine diebstahlsichere Verwahrung von Fahrrädern ermöglicht, eine unautorisierte Nutzung ausschließt, einfach zu bedienen und störunanfällig ist, in ein Fahrradverleihsystem integrierbar sowie kostengünstig bereitstellbar ist.

Die Aufgabe wird durch die im Schutzanspruch 1 aufgeführten Merkmale gelöst. Bevorzugte Weiterbildungen ergeben sich aus den Unteransprüchen.

Erfindungsgemäß weist die Diebstahlsicherungsanordnung ein Fahrrad, einen ortsfesten Fahrradständer und eine Kopplungsbetätigungseinheit auf.

Das Fahrrad weist erfindungsgemäß eine Steuerungseinheit, ein Rahmenschloss und ein fahrradseitigen Kopplungsabschnitt auf.

Die Steuerungseinheit weist erfindungsgemäß ein Authentifizierungsmodul auf.

Erfindungsgemäß ist die Steuerungseinheit ausgebildet, die Authentifizierung eines Benutzers vorzunehmen und einen Sicherungszustandssteuerungsbefehl zu erzeugen.

Das Authentifizierungsmodul hat die Funktionen einen autorisierten Nutzer zu erkennen und von einem nicht autorisierten Nutzer zu unterscheiden. Die strukturelle Ausbildung des Authentifizierungsmoduls kann je nach Authentifizierungsverfahren unterschiedlich sein.

Vorzugsweise ist das Verfahren so ausgebildet, dass der Nutzer bei einer zentralen Stelle Daten hinterlegt, welche ihn autorisieren, das Fahrrad zu benutzen. Die zentrale Stelle ist vorzugsweise ein Server, welcher über das Internet und Telefon erreichbar ist. Die zentrale Stelle gibt dann einen Code aus, welchen der Benutzer an das Authentifizierungsmodul der Steuerungseinheit überträgt.

Dies kann beispielsweise ein einfacher Zahlencode oder Buchstabencode oder eine sonstige Zeichenfolge sein, die der Benutzer direkt am Fahrrad beispielsweise in eine Tastatur oder ein Touchscreen eingibt, der mit dem Authentifizierungsmodul verbunden ist. Nach der Eingabe kommuniziert das Authentifizierungsmodul mit der zentralen Stelle und prüft die Gültigkeit des Codes. Bei einem gültigen Code ist dann die Authentifizierung erfolgreich.

Der Code kann aber auch elektronisch auf einen Datenträger ausgegeben werden, der diesen Code dann elektronisch an das Authentifizierungsmodul überträgt.

Ein solcher Datenträger kann beispielsweise ein RFID, ein elektronischer Schlüssel, ein Datenstick oder ein Smartphone sein. Nach dem Erhalt des Codes kommuniziert das Authentifizierungsmodul vorzugsweise mit der zentralen Stelle um die dem Code zugeordneten Daten abzugleichen. Der Datenabgleich kann ebenso mit den gespeicherten Informationen auf dem Hilfsmittel direkt erfolgen. Bei der Nutzung eines Smartphones als Datenträger können Daten mittels des Displays zum Beispiel über Bar- oder QR-codes oder über eine direkte Datenverbindung wie beispielsweise Bluetooth, NFC oder Ähnliches ausgetauscht werden. Hierzu ist dem Authentifizierungsmodul ein entsprechender Scanner (beispielsweise Kamera oder Laserscanner) oder eine passende Datenschnittstelle, welche die Daten lesen oder empfangen kann, zugeordnet.

Vorzugsweise kann das Authentifizierungsmodul durch ein entsprechendes Programm, beispielsweise eine herunterladbare App, auf die Hardware, beispielsweise Kamera, Fingerabdruckscanner, interne Seriennummern, des Smartphones des Nutzers zugreifen und diese zur zusätzlichen Identifizierung des Nutzers verwenden.

In einer anderen Variante ist dem Authentifizierungsmodul ein Scanner zugeordnet, welcher den Nutzer beispielsweise über biometrische Daten identifizieren kann. So kann beispielsweise eine Kamera am Fahrrad eine Erkennung von Gesicht, Augen durchführen oder ein Fingerabdruckscanner einen Fingerabdruck erkennen. Bei erfolgreichem Abgleich der biometrischen Daten gilt bei dieser Ausführung der Nutzer als authentifiziert.

Bei erfolgreichem Abschluss des Authentifizierungsvorgangs ist die Authentifizierung erfolgt und die Steuerungseinheit erzeugt einen Sicherungszustandssteuerungsbefehl.

Der Sicherungszustandssteuerungsbefehl kann als eine Anweisung entweder zu einem Sichern oder zu einem Entsichern vorliegen. Eine Anweisung zu einem Sichern, nachfolgend auch als Sicherungsbefehl bezeichnet, ist auf ein Verriegeln des Rahmenschlosses, in diesem Fall auch als Verriegelungsbefehl bezeichnet, oder auf ein Verkoppeln der Kopplungseinheit , in diesem Fall auch als Verkopplungsbefehl bezeichnet, gerichtet. Der Sicherungsbefehl kann auch zugleich als Verriegelungsbefehl und als Verkopplungsbefehl vorliegen. Eine Anweisung zu einem Entsichern, nachfolgend auch als Entsicherungsbefehl bezeichnet, ist auf ein Entriegeln des Rahmenschlosses, in diesem Fall auch als Entriegelungsbefehl bezeichnet, oder auf ein Entkoppeln der Kopplungseinheit, in diesem Fall auch als Entkopplungsbefehl bezeichnet, gerichtet. Der Entsicherungsbefehl kann auch zugleich als Entriegelungsbefehl und als Entkopplungsbefehl vorliegen.

Das Rahmenschloss weist erfindungsgemäß ein Rahmenschlossanschlussmodul sowie ein Antrieb- und Sperrelement auf.

Das Rahmenschlossanschlussmodul ist erfindungsgemäß ausgebildet, den Sicherungszustandsteuerungsbefehl zu empfangen und aus dem Sicherungszustandssteuerungsbefehl einen Stellbefehl zu erzeugen.

Das Rahmenschlossanschlussmodul ist hierzu mit der Steuerungseinheit verbunden und empfängt vorzugsweise kabelgebunden den Sicherungszustandssteuerungsbefehl.

Der Antrieb ist erfindungsgemäß mit dem Rahmenschlossanschlussmodul verbunden und ist ausgebildet den Stellbefehl zu erhalten und das Sperrelement mechanisch zu betätigen.

Das Rahmenschlossanschlussmodul generiert aus dem Sicherungszustandssteuerungsbefehl einen entsprechenden Stellbefehl für den Antrieb, welcher zur Übermittlung vorzugsweise drahtgebunden mit dem Rahmenschlossanschlussmodul verbunden ist. Bei dem Rahmenschlossanschlussmodul handelt es sich um eine elektrische oder elektronische Schaltung.Das Rahmenschlussanschlussmodul und der Antrieb können auch als eine gemeinsame Baugruppe ausgebildet sein. Insbesondere kann das Rahmenschlossanschlussmodul an eine in den Antrieb integrierte elektronische oder elektrische Schaltung vorliegen.

Erfindungsgemäß ist mit dem Sperrelement ein Verriegelungszustand herstellbar und zu einem Entriegelungszustand aufhebbar.

Aufgrund des Stellbefehls bewegt der Antrieb das Sperrelement mechanisch in eine Position des Verriegelungszustands oder umgekehrt aus der Position des Verriegelungszustands in eine Position des Entriegelungszustands.

Das Fahrrad ist im Verriegelungszustand erfindungsgemäß nicht fahrbar.

Im Verriegelungszustand besitzt das Sperrelement eine Position, welche den Fahrbetrieb, vorzugsweise mit einem Sperren der Verdrehmöglichkeit der Räder, blockiert.

Das Fahrrad weist einen fahrradseitigen Kopplungsabschnitt auf. Der fahrradseitige Kopplungsabschnitt ist ausgebildet, mit einem ständerseitigen Kopplungsabschnitt gekoppelt zu werden. Der ständerseitige Kopplungsabschnitt und der fahrradseitige Kopplungsabschnitt werden zusammengefasst auch als Kopplungseinheit bezeichnet.

Der fahrradseitige Kopplungsabschnitt weist hierzu mechanisch stabile Formabschnitte wie Vertiefungen, Führungen oder Bohrungen auf, welche zumindest teilweise den ständerseitigen Kopplungsabschnitt aufnehmen können. Es ist ferner eine Bauform möglich, in der umgekehrt der fahrradseitige Kopplungsabschnitt in den ständerseitigen Kopplungsabschnitt aufenommen wird und so eine formschlüssige Kopplung der beiden Kopplungsabschnitte entsteht.

Der ortsfeste Fahrradständer weist den ständerseitigen Kopplungsabschnitt auf. Dieser ist ausgebildet, mit dem fahrradseitigen Kopplungsabschnitt formschlüssig gekoppelt zu werden. Je nach Ausbildung des fahrrradseitigen Kopplungsabschnitts weist der ständerseitige Kopplungsabschnitt mechanisch stabile Formabschnitte wie Vertiefungen, Führungen oder Bohrungen auf, welche zumindest teilweise den fahrradseitigen Kopplungsabschnitt aufnehmen können. Wie im Zusammenhang mit dem fahrradseitigen Kopplungsabschnitt bereits beschrieben ist auch eine Bauform möglich, bei der umgekehrt der ständerseitige Kopplungsabschnitt in dem fahrradseitigen Kopplungsabschnitt aufgenommen wird und so eine formschlüssige Kopplung der beiden Kopplungsabschnitte entsteht.

Die dritte Hauptkomponente der erfindungsgemäßen Anordnung ist die Kopplungsbetätigungseinheit. Erfindungsgemäß weist die Kopplungsbetätigungseinheit ein Kopplungsbetätigungsanschlussmodul sowie einen Aktor und ein Verriegelungselement auf.

Das Kopplungsbetätigungsanschlussmodul ist erfindungsgemäß ausgebildet den Sicherungszustandssteuerungsbefehl zu empfangen und aus dem Sicherungszustandssteuerungsbefehl einen Betätigungsbefehl zu erzeugen.

Das Kopplungsbetätigungsanschlussmodul ist hierzu mit der Steuerungseinheit direkt oder indirekt über eine andere Komponente verbunden. Die Verbindung ist vorzugsweise kabelgebunden ausgeführt. Bei dem Kopplungsbetätigungsanschlussmodul handelt es sich um eine elektrische oder elektronische Schaltung.

Der Aktor ist erfindungsgemäß mit dem Kopplungsbetätigungsanschlussmodul verbunden und ausgebildet den Betätigungsbefehl zu erhalten sowie das Verriegelungselement mechanisch zu betätigen.

Der Aktor ist vorzugsweise kabelgebunden mit dem Kopplungsbetätigungsanschlussmodul verbunden und erhält von diesem den Betätigungsbefehl.

Der Aktor betätigt nach Erhalt des Betätigungsbefehls das Verriegelungselement. Der Aktor wird vorzugsweise elektrisch angetrieben und geschaltet. In einer Bauform ist der Aktor beispielsweise ein Elektromotor, welcher über ein Ritzel ein als Zahnstange ausgebildetes Verriegelungselement bewegt.

Eine weitere mögliche Bauform besteht in einem Elektromagneten, welcher ein bolzenartiges Verriegelungselement zwischen zwei Positionen, einer Sperrposition und einer Entsperrposition, bewegt.

Das Verriegelungselement ist vorzugsweise als Bolzen ausgebildet, welcher in einem Verkopplungszustand in den fahrradseitigen Kopplungsabschnitt geschoben ist. Der Bolzen kann gerade oder gebogen gestaltet. Eine gerade Gestaltung ist besonders bei kurzen Längen vorteilhaft, da sie kostengünstig und in großer Menge bereitstellbar ist. Eine gebogene Form ist bei begrenzten Platzverhältnissen und einer großen Bolzenlänge vorteilhaft.

Die Ausbildung des Aktors und des Verriegelungselements ist nicht auf die beispielhaft beschriebenen möglichen Bauformen beschränkt.

Mit dem Verriegelungselement ist erfindungsgemäß ein Verkopplungszustand zum fahrradseitigen Kopplungsabschnitt herstellbar und zu einem Entkopplungszustand aufhebbar. In dem Verkopplungszustand liegt ein Formschluss zwischen dem fahrradseitigen und ständerseitigen Kopplungsabschnitt vor, so dass das Fahrrad nicht von dem Fahrradständer entfernt werden kann. Wird das Verriegelungselement in eine Entsperrposition gebracht, werden der Formschluss und damit der Verkopplungszustand aufgehoben. Es liegt nun der Entkopplungszustand vor, in dem das Fahrrad durch den Nutzer von dem Fahrradständer entfernt werden kann.

Die Kopplungsbetätigungseinheit kann baulich entweder dem Fahrrad oder dem ortsfesten Fahrradständer zugeordnet sein. Ferner kann die Kopplungsbetätigungseinheit baulich auch verteilt dem Fahrrad und dem ortsfesten Fahrradständer zugeordnet sein.

Erfindungsgemäß werden mit der Steuerungseinheit parallel zwei Sicherungen bereitgestellt.

Einen wird mit dem Sicherungszustandsteuerungsbefehl als Verriegelungs- oder Entriegelungsbefehl rahmenschlossseitig über das Rahmenschlossanschlussmodul ein Stellbefehl für das Stellelement bereitgestellt, welches einen Verriegelungszustand oder Entriegelungszustand bewirkt. Zum Zweiten wird dem Sicherungszustandsbefehl als Verkopplungs- oder Entkopplungsbefehl kopplungseinheitsseitig über das Kopplungsbetätigungsanschlussmodul ein Betätigungsbefehl für den Aktor erzeugt, welcher einen Verkopplungszustand oder Entkopplungszustand bewirkt.

Somit sind Verriegelungsbefehl und Verkopplungsbefehl, Entriegelungsbefehl und Entkopplungsbefehl, Rahmenschlossanschlussmodul und Kopplungsbetätigungsanschlussmodul, Stellbefehl und Betätigungsbefehl, Stellelement und Aktor, Sperrelement und Verriegelungselement, Verriegelungszustand und Verkopplungszustand sowie Entriegelungszustand und Entkopplungszustand jeweils parallele Kategorien.

Die erfindungsgemäße Diebstahlsicherungsanordnung weist insbesondere nachfolgend beschriebene Vorteile auf.

Mit der erfindungsgemäße Diebstahlsicherungsanordnung wurde eine Lösung gefunden, die in besonders einfacher und fehlbedienungsunanfälliger Weise eine alternative oder kumulative Sicherung des Fahrrads durch ein Verschließen des Fahrrads mittels des Rahmenschlosses sowie durch ein Anschließen des Fahrrads mittels der Kopplungseinheit zusammen mit dem Kopplungsbetätigungsmodul ermöglicht.

Hierbei wird es durch die Diebstahlsicherungsanordnung vorteilhaft ermöglicht, dass die Entscheidung sowohl über ein Verschließen und Anschließen beziehungsweise umgekehrt über ein Freigeben einheitlich durch das Fahrrad getroffen wird. Auch bei einem Anschließen an den ortsfesten Fahrradständer wird die Entscheidung über ein Verkoppeln oder Entkoppeln allein fahrradseitig getroffen. Dies ermöglicht es als Vorteil, den Fahrradständer ohne eigene Intelligenz, also ohne eine intelligente Steuerungseinheit mit Authentifizierungsmodul auszubilden. Zudem ist es nicht erforderlich, dass der Fahrradständer mit einer zentralen Stelle, wie insbesondere einem Server, kommuniziert. Ferner ist es möglich, in einer Weiterbildung den Fahrradständer sogar ohne eigene Energieversorgung auszubilden. Dadurch kann ein solcher Fahrradständer sehr kostengünstig bereitgestellt werden und bedarf nur geringer laufender Überwachung und geringer laufender Kosten. Trotz dieser strukturellen Entlastung und Funktionsentlastung des Fahrradständers bleibt es möglich, das Fahrrad ortsfest anzuschließen. Ferner kann durch den Formschluss an der Kopplungseinheit ein besonders hoher Sicherheitsstandard erreicht werden, der weit über den sonst üblicher umschlingender Fahrradschlösser wie beispielsweise Kabel-, Ketten-, Falt oder Bügelschlösser hinausgeht.

Weiterhin ist es vorteilhaft, dass sich die erfindungsgemäße Diebstahlsicherungsanordnung in ein zentral gesteuertes Fahrradverleihsystem integrieren lässt. Besonders vorteilhaft ist es hierbei, dass ein solches zentral gesteuertes Fahrradverleihsystem sowohl als stationsbasiertes System als auch als Mischsystem ausgebildet werden kann. Bei einem stationsbasierten System ist es vorgesehen, dass die Fahrräder zur Rückgabe und zur Entnahme immer an ortsfesten Fahrradständern des Fahrradverleihsystems angeschlossen sind. Bei einem Mischsystem kann die Rückgabe und die Entnahme auch an weiteren Orten ohne ortsfeste Fahrradständer erfolgen. Dies ist durch die zusätzliche Sicherungsmöglichkeit durch das Rahmenschloss möglich.

Gemäß einer vorteilhaften Weiterbildung ist das Rahmenschloss ausgebildet, durch manuelle Betätigung einen Verriegelungszustand herzustellen und einen Sicherungszustandssteuerungsbefehl zu erzeugen, mit dem ein Verkopplungszustand herstellbar ist.

Das Rahmenschloss ist in dieser Weiterbildung nicht nur mittels des eines Sicherungszustandssteuerungsbefehls, der durch die Steuerungseinheit erzeugt wird und über das Rahmenschlossanschlussmodul und über den Antrieb auf das Sperrelement wirkt, in einen Verriegelungszustand zu bringen. Vielmehr kann durch ein manuelles Betätigen, beispielsweise ein manuelles Positionieren des Sperrelementes, der Verriegelungszustand hergestellt werden. Die manuelle Betätigung kann dabei direkt auf das Sperrelement wirken. Es kann auch eine dies unterstützende Mechanik oder elektromechanische Vorrichtung vorgesehen sein.

Zudem wird gemäß dieser Weiterbildung bei dem Verriegelungsvorgang der Sicherungszustandssteuerungsbefehl erzeugt, wobei dies beispielsweise direkt durch das Rahmenschlossanschlussmodul, ein zusätzliche elektronische oder elektrische Schaltung oder in der Weise erfolgen kann, dass die Steuerungseinheit von dem Rahmenschloss ein Signal erhält, worauf die Steuerungseinheit den Sicherungszustandssteuerungsbefehl erzeugt. Der Sicherungszustandsteuerungsbefehl bewirkt als Verkopplungsbefehl, dass über das Kopplungsbetätigungsanschlussmodul ein Betätigungsbefehl erzeugt wird, durch den der Aktor einen Verkopplungszustand herbeiführt. Durch den Verkopplungszustand ist das Fahrrad an dem ortsfesten Fahrradständer angeschlossen.

Der mittels der manuellen Betätigung bewirkte Sicherungszustandsteuerungsbefehl liegt dabei als Sicherungsbefehl, nicht aber als Entsicherungsbefehl vor. Es ist damit möglich, das Fahrrad ohne Authentifizierung zu verschließen und zudem gleichzeitig an dem ortsfesten Fahrradständer anzuschließen. Es ist aber nicht möglich, ohne Authentifizierung das Fahrrad zu entriegeln und von dem ortsfesten Fahrradständer zu trennen. Damit ist ein Diebstahlschutz unkompliziert und selbst bei etwaigen Störungen der Kommunikation mit der zentralen Stelle sowie ohne eine Anmeldung bewirkbar.

Der Vorteil der Weiterbildung liegt darin, dass durch ein manuelles Betätigen des Rahmensschlosses simultan ein Verschließen wie auch eine Kopplung mit dem ortsfesten Fahrradständer hergestellt wird.

Gemäß einer weiteren vorteilhaften Weiterbildung weist die Diebstahlsicherungsanordnung eine Schnittstelle bestehend aus einem fahrradseitigen und einem ständerseitigen Schnittstellenabschnitt auf.

Dabei weist das Fahrrad einen fahrradseitigen Schnittstellenabschnitt auf, welcher mit der Steuerungseinheit verbunden und ausgebildet ist einen Sicherungszustandssteuerungsbefehl zu übertragen.

Der ortsfeste Fahrradständer weist gemäß einer vorteilhaften Weiterbildung einen ständerseitigen Schnittstellenabschnitt auf, welcher ausgebildet ist einen Sicherungszustandssteuerungsbefehl von dem fahrradseitigen Schnittstellenabschnitt zu empfangen. Dabei ist der ständerseitige Schnittstellenabschnitt als entsprechendes Gegenstück zum fahrradseitigen Schnittstellenabschnitt gestaltet.

Die beiden Schnittstellenabschitte sind so ausgebildet, dass sie den Sicherungszustandsteuerungsbefehl von dem Fahrrad an den ortsfesten Fahrradständer übertragen können. In einer einfachen Ausgestaltung kann die Schnittstelle über elektrische Berührungskontakte ausgebildet sein. Wird das Fahrrad in den ortsfesten Fahrradständer gestellt und durch Führungselemente in einer gewünschten Stellung positioniert, wird ein physischer Kontakt zwischen den Berührungskontakten der beiden Schnittstellenabschnitte hergestellt.

So kann beispielsweise durch ein Einhängen oder Stellen des Fahrrads auf eine Schiene dessen Gewicht genutzt werden um zum Einen durch Führungselemente dessen Position festzulegen und zum Anderen durch eine Hebelanordnung den physischen Kontakt zwischen den Berührungskontakten der beiden Schnittstellenabschnitten herzustellen.

Bevorzugt kann die Schnittstelle aber auch so ausgebildet sein, dass eine drahtlose Übertragung erfolgt. Diese kann als einfache induktive Übertragung oder beispielsweise auch als NFC-Verbindung ausgebildet sein.

Die Kopplungsbetätigungseinheit ist gemäß dieser weiteren vorteilhaften Weiterbildung an dem ortsfesten Fahrradständer angeordnet und mit dem ständerseitigen Schnittstellenabschnitt verbunden.

Die Kopplungsbetätigungseinheit ist so am ortsfesten Fahrradständer befestigt und mit dem ständerseitigen Schnittstellenabschnitt verbunden, dass sie den Verkopplungszustand nach dem Erhalt des Sicherungszustandssteuerungsbefehls herstellen kann.

Der Vorteil bei der Anordnung der Kopplungsbetätigungseinheit am ortsfesten Fahrradständer ist eine Einsparung von Gewicht am Fahrrad sowie eine Verhinderung einer ungünstigen Massenverteilung, beispielsweise an der Vorderradgabel).

Mit der strukturellen Verteilung der Komponenten der Anordnung einerseits auf das Fahrrad und andererseits auf den Fahrradständer wird eine Funktionsaufteilung zwischen dem Fahrrad und dem Fahrradständer nach dem Master-Slave-Prinzip ermöglicht. Hierbei bildet das Fahrrad den Master und der Fahrradständer den Slave. Es wird damit fahrradseitig die Entscheidung über ein Anschließen oder Freigeben festgelegt. Diese Entscheidung wird dann durch den Fahrradständer aktiv ausgeführt.

Als besonderer Vorteil kann das Fahrrad in dieser Weiterbildung für das Anschließen an dem ortsfesten Fahrradständer ohne einen eigenen Verriegelungsmechanismus und damit leichter, störunanfälliger und kostengünstiger ausgebildet werden.

Gemäß einer vorteilhaften Weiterbildung weist das Fahrrad eine Elektroenergiequelle auf, die über eine fahrradseitige und eine ständerseitige Kontaktstelle den Aktor mit der Energie für seinen Betrieb versorgt.

Die Elektroenergiequelle ist vorzugsweise als ein Akkumulator am Fahrrad ausgebildet. Hierbei kann es sich auch um einen bei einem E-Bikes ohnehin vorhandenen Akkumulator handeln. Der Akkumulator ist durch eine externe Stromzufuhr oder während der Fahrt, beispielsweise über einen Nabendynamo, aufladbar.

Gemäß dieser Weiterbildung ist die Elektroenergiequelle ferner mit der fahrradseitigen Kontaktstelle über ein Kabel verbunden. Das Kabel ist ausgebildet, einen elektrischen Strom von der Elektroenergiequelle zur fahrradseitigen Kontaktstelle zu übertragen.

Die ständerseitige Kontaktstelle ist mit dem Aktor verbunden. Die ständerseitige Kontaktstelle ist ebenfalls mittels eines Kabels mit dem Aktor stromleitend verbunden.

Die fahrradseitige Kontaktstelle und die ständerseitige Kontaktstelle werden zusammengefasst auch als die Kontaktstellen bezeichnet.

Die Kontaktstellen sind ausgebildet, bei einer Positionierung des fahrradseitigen Kopplungsabschnitts an dem ständerseitigen Kopplungsabschnitt eine Elektroenergie zu übertragen. Die ständerseitige Kontaktstelle bildet dabei das korrespondierende Gegenstück zur fahrradseitigen Kontaktstelle.

Durch das Einstellen des Fahrrads in den ortsfesten Fahrradständer wird eine elektrische Verbindung zwischen den beiden Kontaktstellen erzeugt. Diese Verbindung ermöglicht eine Übertragung der Elektroenergie.

Sie ist durch einen direkten Kontakt oder kontaktlos ausgebildet. Ein direkter Kontakt kann ähnlich wie bei der Verbindung der beiden Schnittstellenabschnitte durch Berührungskontakte bereitgestellt werden, wobei die sichere Kontaktierung durch eine mechanische Hebelanordnung unterstützt sein kann, welche durch eine einfache Mechanik leitfähige Bereiche der Berührungskontakte aneinander drückt.

Die Kontaktstellen können auch für eine berührungskontaktlose, beispielsweise induktive oder kapazitive Übertragung ausgebildet sein.

Der Vorteil dieser Weiterbildung liegt darin, dass der ortsfeste Fahrradständer keine eigene Energieversorgung aufweisen muss. Er kann somit eine einfache und kostengünstige Bauweise aufweisen.

Nach einer anderen vorteilhaften Weiterbildung weist die Diebstahlsicherungsanordnung eine Datenverbindung zwischen Fahrradständer und Fahrrad auf und ist ausgebildet, Fahrradständerdaten an die Steuerungseinheit zu übertragen.

Fahrradständerdaten können insbesondere ein Fahrradständeridentitätscode, Daten zum Standort des Fahrradständers, Daten zum Kopplungszustand, Daten zur Betriebsfähigkeit oder Daten zur Benutzungshäufigkeit des Fahrradständers sein.

In dieser Weiterbildung sind die Schnittstellen nach der Herstellung einer Verbindung zusätzlich ausgebildet eine Übertragung von Daten vom ständerseitigen Schnittstellenabschnitt zum fahrradseitigen Schnittstellenabschnitt und zur Steuerungseinheit zu übertragen.

So können Fahrradständerdaten vom Fahrradständer an die Steuerungseinheit übertragen und durch diese an die zentrale Stelle übertragen werden. Der ortsfeste Fahrradständer muss vorteilhafter Weise nicht ausgebildet sein, selbst mit der zentralen Stelle kommunizieren zu können.

In einer nächsten vorteilhaften Weiterbildung weist der ortsfeste Fahrradständer einen Kopplungszustandssensor auf.

Mit dem Kopplungszustandssensor ist ein Kopplungszustand erfassbar und übertragbar.

Der Kopplungszustandssensor ermittelt, ob ein Verkopplungszustand oder ein Entkopplungszustand vorliegt. Den ermittelten Kopplungszustand der Kopplungsabschnitte stellt der Kopplungszustandssensor übertragbar bereit.

In einer Variante überträgt er den Kopplungszustand an die Auswerteeinheit. Dies erleichtert vorteilhaft ein fehlerfreies Betätigen des Verriegelungselements des ständerseitigen Kopplungsabschnitts. Insbesondere kann die Auswerteeinheit so erkennen, ob ein auf der Grundlage eines Kopplungszustandssteuerungsfehls erzeugter Betätigungsbefehl von dem Aktor zutreffend ausgeführt worden ist und sich das Verriegelungselement in der zutreffenden Position befindet.

Vorzugsweise wird der Kopplungszustand zusätzlich oder ausschließlich an die Steuerungseinheit übertragen. Die Übertragung kann dabei bevorzugt über die Datenschnittstelle erfolgen. Es sind aber auch andere Übertragungen möglich. Die Steuerungseinheit kann dann den Kopplungszustand an die zentrale Stelle, beispielsweise an einen Server, fernübertragen,

So kann beispielswese bei dem Einstellen eines Fahrrads in den ortsfesten Fahrradständer der Kopplungszustand an die zentrale Stelle übermittelt werden. Die Kopplungszustandsinformation kann vorzugsweise auch mit einem Fahrradständeridentitätscode des ortsfesten Fahrradständers verbunden werden. Die zentrale Stelle kann aus diesen Daten die Auslastung und Frequentierung verschiedener Standorte errechnen. Zudem kann die Lokalisierung eines Fahrrads verifiziert werden, da der Standort des betreffenden ortsfesten Fahrradständers bei der zentralen Stelle hinterlegt ist. Ferner kann so eine Datenbasis für eine Optimierung der Standorte bereitgestellt werden. Ein besonderer Vorteil besteht darin, dass Daten über Belegungen von Fahrradständern in Echtzeit zur Verfügung stehen, obwohl die Fahrradständer keine Mittel zur Kommunikation mit der zentralen Stelle aufweisen.

Die Erfindung wird als Ausführungsbeispiel anhand von
- Fig. 1: Diebstahlsicherungsanordnung (Seitenansicht)
- Fig. 2: Detailansicht Lenkergabel mit ortsfesten Fahrradständer (Kopplungszustand)
- Fig. 3: Detailansicht Rahmenschloss
- Fig. 4: Detailansicht fahrradseitige Ausführung
näher erläutert.

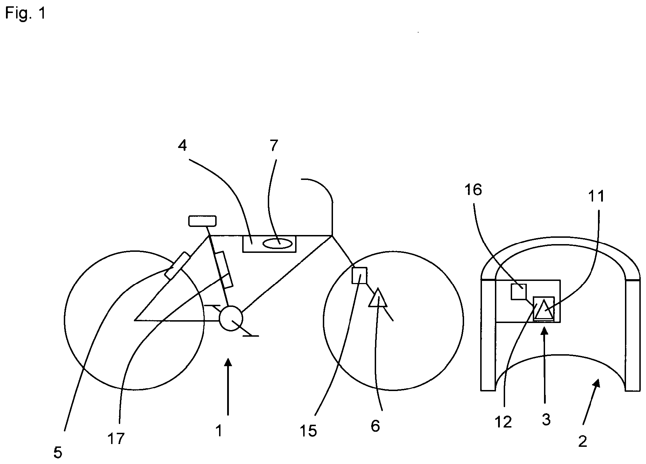

Die Figur 1 zeigt ein Ausführungsbeispiel der Diebstahlsicherungsanordnung in einer Seitenansicht.

Das Fahrrad 1 weist eine Steuerungseinheit 4 mit Authentifizierungsmodul 7, ein Rahmenschloss 5, einen fahrradseitigen Kopplungsabschnitt 6, einen fahrradseitigen Schnittstellenabschnitt 15 und eine Elektroenergiequelle 17 auf.

Der fahrradseitige Schnittstellenabschnitt 15 und der fahrradseitige Kopplungsabschnitt 6 befinden sich in dieser Ausführung an der Vorderradgabel des Fahrrads 1.

An dem ortsfesten Fahrradständer 2 sind der ständerseitige Kopplungsabschnitt 11, die Kopplungsbetätigungseinheit 3 und der ständerseitige Schnittstellenabschnitt 16 angeordnet.

Die Kopplungsbetätigungseinheit 3 beinhaltet das Kopplungsbetätigungsanschlussmodul 12. Die beiden Kopplungsabschnitte 6, 11 und die Schnittstellenabschnitte 15, 16 sind so angeordnet, das sie beim Einstellen des Fahrrads 1 in den ortsfesten Fahrradständer 2 zueinander ausgerichtet werden.

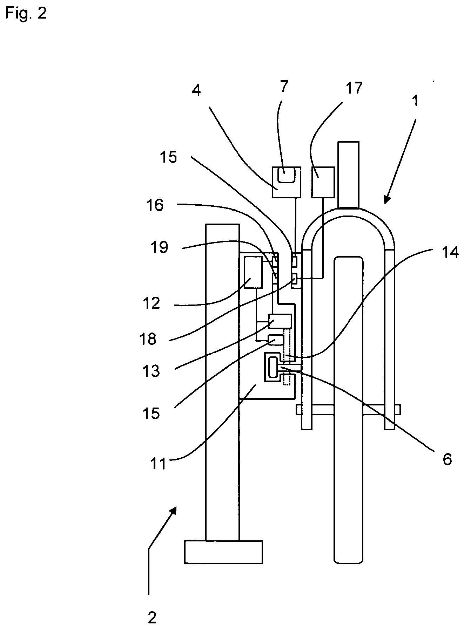

In der Figur 2 ist das Fahrrad 1 in dem ortsfesten Fahrradständer 2 in einem Sicherungszustand dargestellt. In dem dargestellten Sicherungszustand liegt bei dem Rahmenschloss ein Verriegelungszustand sowie ferner ein Verkopplungszustand vor.

In dem Ausführungsbeispiel nach Figur 2 weist der ständerseitige Kopplungsabschnitt 11 einen T-Nut-förmigen Formabschnitt auf. Die Erstreckung des T-Nut-Abschnitts ist im Wesentlichen waagerecht angeordnet und weist eine Begrenzung auf. Der fahrradseitige Kopplungsabschnitt 5 weist einen hierzu korrespondierenden pilzkopfförmigen Formkörper auf, so dass das Fahrrad vorwärts in den ortsfesten Fahrradständer 2 eingefahren werden kann, wobei der pilzkopfförmige Formkörper in den T-Nut-Abschnitt bis zu der Begrenzung eingeführt werden kann. Durch die Hinterschneidungen der T-Nut wird der pilzkopfförmige Formkörper gegen ein seitliches Herausziehen formschlüssig gesichert.

Da über die Schnittstellenabschnitte 15, 16 eine Verbindung zwischen der Steuerungseinheit 4 und der Auswerteeinheit 9 besteht, kann ein Verkopplungsbefehl der Steuerungseinheit 4 an das Kopplungsbetätigungsanschlussmodul 12 übertragen werden, welches somit einen Betätigungsbefehl für den Aktor 13 bereitstellt. Der Aktor 13 fährt gemäß dem Betätigungsbefehl das Verriegelungselement 14, welches im Ausführungsbeispiel als ein verfahrbarer Bolzen ausgebildet ist, aus. Das Verriegelungselement 14 wird dabei in Einfahrrichtung hinter dem pilzkopfförmigen Formkörper ausgefahren, so dass nun der pilzkopfförmige Formkörper eingeschlossen ist und nicht mehr entgegen der Einfahrrichtung aus der T-Nut herausgeführt werden kann. Damit sind der ständerseitige Kopplungsabschnitt 11 und der fahrradseitige Kopplungsabschnitt 6 formschlüssig miteinander verbunden, so dass das Fahrrad 1 an den ortsfesten Fahrradständer 2 zuverlässig angeschlossen und somit gegen Diebstahl geschützt ist. Der Aktor 13 weist einen elektromechanischen Antrieb auf. Die elektrische Energie wird dabei von der im Fahrrad 1 angeordneten Elektroenergiequelle 17, bei der es sich um einen Akku handelt, bereitgestellt. Der Aktor 13 ist dabei über die Kontaktstellen 18, 19 mit der Elektroenergiequelle 17 verbunden.

Wenn sich ein berechtigter Nutzer nun über das Authentifizierungsmodul 7 authentifiziert, erzeugt die Steuerungseinheit 4 einen Entsicherungsbefehl, der zum einen als Entkopplungsbefehl an das Kopplungsbetätigungsanschlussmodul 12 übertragen wird. Das Kopplungsbetätigungsanschlussmodul 12 erzeugt dann einen Betätigungsbefehl an den Aktor 13, welcher das Verriegelungselement 14 elektromechanisch zurückfährt. Dadurch wird der Weg für den pilzkopfförmigen Formkörper entgegen der Einfahrrichtung frei und das Fahrrad kann aus dem Fahrradständer 2 rückwärts herausgefahren werden. Zugleich wird der Entsicherungsbefehl als Entriegelungsbefehl an das in Figur 2 nicht dargestellte Rahmenschloss übertragen. Dadurch wird das Rahmenschloss in den Entriegelungszustand versetzt. Damit ist das Fahrrad 1 nun weder angeschlossen noch verschlossen und steht für den berechtigen Nutzer zur Verfügung. Der Kopplungszustandssensor 20 detektiert anhand der Position des Verriegelungselements 14, ob das Fahrrad 1 angeschlossen ist oder nicht.

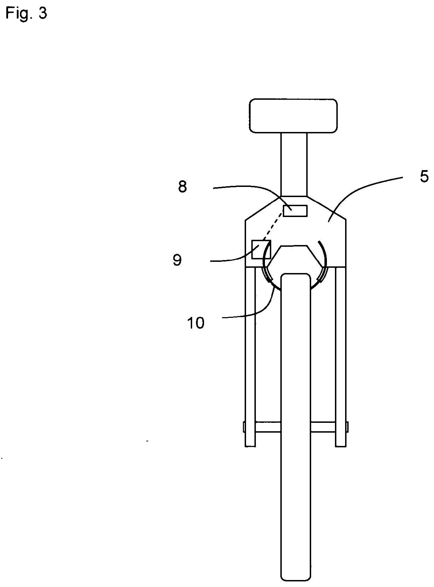

Figur 3 zeigt eine Detailansicht des Rahmenschlosses 5 im Verrieglungszustand. Das Rahmenschloss 5 ist in dieser Ausführung am Hinterrad des Fahrrads 1 angeordnet. Das Rahmenschloss 5 beinhaltet das Rahmenschlossanschlussmodul 8, das Antriebselement 9 und das Sperrelement 10.

Empfängt das Rahmenschlossanschlussmodul 8 den Sicherungszustandsteuerungsbefehl, generiert es den Stellbefehl zum Betätigen des Sperrelementes 10 und sendet ihn an das Antriebselement 9.

Das Antriebselement 9 bewegt daraufhin das Sperrelement 10 in den Speichenzwischenraum und stellt so den Verriegelungszustand her.

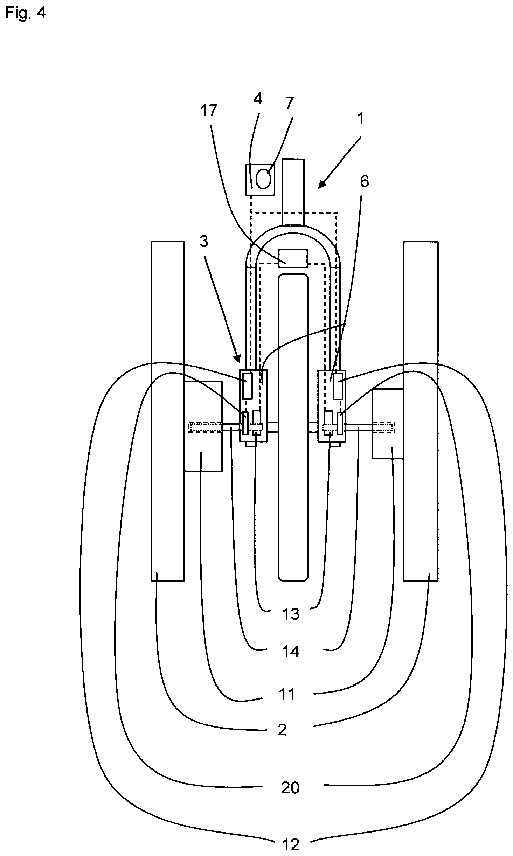

Figur 4 zeigt eine Detailansicht für eine fahrradseitige Ausführung der Diebstahlsicherungsanordnung im Verkopplungszustand. Im Vergleich zu dem Ausführungsbeispiel aus Figur 2 ist die gesamte Elektronik fahrradseitig angebracht.

Der ständerseitige Kopplungsabschnitt 11 am ortsfesten Fahrradständer 2 ist in dieser Ausführung als eine Bohrung im ständerseitigen Kopplungsabschnitt 11 ausgestaltet. Die Bohrung nimmt für die Herstellung eines Verkopplungszustands einen Bolzen auf, bei dem es sich in diesem Ausführungsbeispiel um ein Bauteil handelt, welches baulich das Verriegelungselement 14 und den fahrradseitigen Kopplungsabschnitt integriert.

Die Kopplungsbetätigungseinheit 3 ist doppelt ausgebildet und beinhaltet jeweils das Kopplungsbetätigungsanschlussmodul 12, den Koppungszustandsensor 20 den Aktor 13 und das Verriegelungselement 14. Die Kopplungsbetätigungseinheit 3 ist hier in den fahrradseitigen Kopplungsabschnitt 6 integriert.

Die Aktoren 13 sind mit der Elektroenergiequelle 17 und die Kopplungsbetätigungsmodule 12 mit der Steuerungseinheit 4 verbunden. Die Steuerungseinheit 4 weist das Authentifizierungsmodul 7 zur Authentifizierung des Benutzers auf.

Zum Entkoppeln bewegen die Aktoren 13 die Verriegelungselemente 14 in eine hohl ausgebildete Radnabe, wodurch das Fahrrad freigegeben wird.

### Verwendete Bezugszeichen

- 1: Fahrrad
- 2: ortsfester Fahrradständer
- 3: Kopplungsbetätigungseinheit
- 4: Steuerungseinheit
- 5: Rahmenschloss
- 6: fahrradseitiger Kopplungsabschnitt
- 7: Authentifizierungsmodul
- 8: Rahmenschlossanschlussmodul
- 9: Antriebselement
- 10: Sperrelement
- 11: ständerseitiger Kopplungsabschnitt
- 12: Kopplungsbetätigungsanschlussmodul
- 13: Aktor
- 14: Verriegelungselement
- 15: fahrradseitiger Schnittstellenabschnitt
- 16: ständerseitiger Schnittstellenabschnitt
- 17: Elektroenergiequelle
- 18: fahrradseitige Kontaktstelle
- 19: ständerseitige Kontaktstelle
- 20: Kopplungszustandssensor

## Patentansprüche

1. Diebstahlsicherungsanordnung,
aufweisend ein Fahrrad (1), einen ortsfesten Fahrradständer (2) und eine Kopplungsbetätigungseinheit (3)
wobei das Fahrrad eine Steuerungseinheit (4), ein Rahmenschloss (5) und einen fahrradseitigen Kopplungsabschnitt (6) aufweist,
wobei die Steuerungseinheit (4) ein Authentifizierungsmodul (7) aufweist und wobei die Steuerungseinheit (4) ausgebildet ist, eine Authentifizierung eines Benutzers vorzunehmen und einen Sicherungszustandssteuerungsbefehl zu erzeugen,
wobei das Rahmenschloss (5) ein Rahmenschlossanschlussmodul (8) sowie ein Antriebselement (9) und Sperrelement (10) aufweist,
wobei das Rahmenschlossanschlussmodul (8) ausgebildet ist den Sicherungszustandssteuerungsbefehl zu empfangen und aus dem Sicherungszustandsteuerungsbefehl einen Stellbefehl zu erzeugen,
wobei der Antrieb (9) mit dem Rahmenschlossanschlussmodul (8) verbunden und ausgebildet ist den Stellbefehl zu erhalten und das Sperrelement (10) mechanisch zu betätigen,
wobei mit dem Sperrelement (10) ein Verriegelungszustand herstellbar und zu einem Entriegelungszustand aufhebbar ist
und wobei in dem Verriegelungszustand das Fahrrad (1) nicht fahrbar ist, wobei der fahrradseitige Kopplungsabschnitt (6) ausgebildet ist mit einem ständerseitigen Kopplungsabschnitt (11) gekoppelt zu werden,
wobei der ortsfeste Fahrradständer (2) einen ständerseitigen Kopplungsabschnitt (11) aufweist der ausgebildet ist, den fahrradseitigen Kopplungsabschnitt (6) formschlüssig zu koppeln,
wobei die Kopplungsbetätigungseinheit (3) ein Kopplungsbetätigungsanschlussmodul (12), einen Aktor (13) und ein Verriegelungselement (14) aufweist,
wobei das Kopplungsbetätigungsanschlussmodul (12) ausgebildet ist den Sicherungszustandssteuerungsbefehl zu empfangen und aus dem Sicherungszustandssteuerungsbefehl einen Betätigungsbefehl zu erzeugen, wobei der Aktor (13) mit dem Kopplungsbetätigungsanschlussmodul (12) verbunden und ausgebildet ist den Betätigungsbefehl zu erhalten und das Verriegelungselement (14) mechanisch zu betätigen,
und wobei mittels des Verriegelungselements (14) ein Verkopplungszustand zu dem fahrradseitigen Kopplungsabschnitt (6) herstellbar und zu einem Entkopplungszustand aufhebbar ist, **dadurch gekennzeichnet dass** das Rahmenschloss (5) und der fahrradseitige Kopplungsabschnitt (6) als alternativ oder kumulativ durch die Steuerungseinheit (4) zu betätigende zwei parallele Sicherungen ausgebildet sind.

2. Diebstahlsicherungsanordnung nach Anspruch 1,
**dadurch gekennzeichnet,**
**dass** das Rahmenschloss (5) ausgebildet ist durch manuelle Betätigung einen Verriegelungszustand herzustellen und bei manueller Betätigung einen Sicherungszustandssteuerungsbefehl zu erzeugen, mit dem ein Verkopplungszustand herstellbar ist.

3. Diebstahlsicherungsanordnung nach Anspruch 1 und 2,
**dadurch gekennzeichnet,**
**dass** das Fahrrad (1) einen fahrradseitigen Schnittstellenabschnitt (15) aufweist,
der mit der Steuerungseinheit (4) verbunden und ausgebildet ist, einen Sicherungszustanssteuerungsbefehl zu übertragen,
wobei der ortsfeste Fahrradständer (2) einen ständerseitigen Schnittstellenabschnitt (16) aufweist, welcher ausgebildet ist, einen Sicherungszustandssteuerungsbefehl von dem fahrradseitigen Schnittstellenabschnitt zu empfangen
und wobei die Kopplungsbetätigungseinheit (3) an dem ortsfesten Fahrradständer (2) angeordnet und mit dem ständerseitigen Schnittstellenabschnitt (16) verbunden ist.

4. Diebstahlsicherungsanordnung nach Anspruch 3,
**dadurch gekennzeichnet,**
**dass** das Fahrrad (1) eine Elektroenergiequelle (17) und eine fahrradseitige Kontaktstelle (18) aufweist,
wobei die fahrradseitige Kontaktstelle (18) mit der Elektroenergiequelle (17) verbunden ist,
wobei der ortsfeste Fahrradständer (2) eine ständerseitige Kontaktstelle (19) aufweist, welche mit dem Aktor (13) verbunden ist
und wobei die Kontaktstellen ausgebildet sind bei einer Positionierung des fahrradseitigen Kopplungsabschnitts (6) an dem ständersteitigen Kopplungsabschnitt (11) eine Elektroenergie zu übertragen.

5. Diebstahlsicherungsanordnung nach Anspruch 3 oder 4,
**dadurch gekennzeichnet,**
**dass** sie eine Datenverbindung zwischen ortsfesten Fahrradständer (2) und Fahrrad (1) aufweist, welche ausgebildet ist Fahrradständerdaten an die Steuerungseinheit (4) zu übertragen.

6. Diebstahlsicherungsanordnung nach einem der vorhergehenden Ansprüche,
**dadurch gekennzeichnet,**
**dass** der ortsfeste Fahrradständer einen Kopplungszustandssensor (20) aufweist, mit welchem ein Kopplungszustand erfassbar und übertragbar ist.

## Claims

1. An anti-theft device,
comprising a bicycle (1), a stationary bicycle stand (2) and a coupling actuating unit (3)
wherein the bicycle comprises a control unit (4), a frame lock (5) and a bicycle-side coupling section (6),
wherein the control unit (4) comprises an authentication module (7), and wherein the control unit (4) is designed to perform an authentication of a user and to generate a security status control command,
wherein the frame lock (5) comprises a frame lock connection module (8) as well as a drive element (9) and a locking element (10),
wherein the frame lock connection module (8) is designed to receive the security status control command and to generate a position-changing command from the security status control command,
wherein the drive element (9) is connected to the frame lock connection module (8) and is designed to receive the position-changing command and to mechanically actuate the locking element (10),
wherein a locking state can be established by means of the locking element (10) and can be released to achieve an unlocking state
and wherein, in the locking state, the bicycle (1) cannot be ridden,
wherein the bicycle-side coupling section (6) is designed to be coupled to a stand-side coupling section (11),
wherein the stationary bicycle stand (2) has a stand-side coupling section (11) which is designed to couple the bicycle-side coupling section (6) in a form-fit manner,
wherein the coupling actuation unit (3) comprises a coupling actuation connection module (12), an actuator (13) and a locking element (14), wherein the coupling actuation connection module (12) is designed to receive the security status control command and to generate an actuation command from the security status control command,
wherein the actuator (13) is connected to the coupling actuation connection module (12) and is designed to receive the actuation command and to mechanically actuate the locking element (14),
and wherein a coupling state with the bicycle-side coupling section (6) can be established and can be released to a decoupling state by means of the locking element (14), **characterized in that** the frame lock (5) and the bicycle-side coupling section (6) are designed as two parallel locks to be actuated alternatively or cumulatively by the control unit (4).

2. The anti-theft device according to claim 1,
**characterized in**
**that** the frame lock (5) is designed to establish a locking state by manual operation and, by manual operation, to generate a security state control command which can be used to establish a coupling state.

3. The anti-theft device according to claims 1 and 2,
**characterized in**
**that** the bicycle (1) comprises a bicycle-side interface section (15), which is connected to the control unit (4) and is designed to transmit a security status control command,
wherein the stationary bicycle stand (2) comprises a stand-side interface section (16) which is designed to receive a security state control command from the bicycle-side interface section (15),
and wherein the coupling actuation unit (3) is arranged at the stationary bicycle stand (2) and is connected to the stand-side interface section (16).

4. The anti-theft device according to claim 3,
**characterized in**
**that** the bicycle (1) comprises an electrical energy source (17) and a bicycle-side contact point (18),
wherein the bicycle-side contact point (18) is connected to the electrical energy source (17),
wherein the stationary bicycle stand (2) has a stand-side contact point (19) which is connected to the actuator (13),
and wherein the contact points are designed to transmit electrical energy when the bicycle-side coupling section (6) is positioned at the stand-side coupling section (11).

5. The anti-theft device according to claim 3 or 4,
**characterized in**
**that** it comprises a data connection between the stationary bicycle stand (2) and the bicycle (1), which is designed to transmit bicycle stand data to the control unit (4).

6. The anti-theft device according to one of the previous claims,
**characterized in**
**that** the stationary bicycle stand comprises a coupling status sensor (20) by means of which a coupling status can be detected and transmitted.

## Revendications

1. Dispositif antivol,
présentant une bicyclette (1), un support de bicyclette fixe (2) et une unité d'actionnement de couplage (3),
où la bicyclette comprend une unité de commande (4), une serrure de cadre (5) et une section d'accouplement côté bicyclette (6),
où l'unité de commande (4) comprend un module d'authentification (7) et où l'unité de commande (4) est adaptée pour effectuer une authentification d'un utilisateur et pour générer une commande d'état de sécurité,
où la serrure de cadre (5) présente un module de raccordement de serrure de cadre (8) ainsi qu'un élément d'entraînement (9) et un élément de blocage (10),
où le module de raccordement de la serrure de cadre (8) est conçu pour recevoir la commande d'état de sécurité et pour générer un ordre de réglage à partir de la commande d'état de sécurité,
où l'entraînement (9) est relié au module de raccordement de serrure de cadre (8) et est conçu pour recevoir la commande de réglage et pour actionner mécaniquement l'élément de blocage (10),
où un état de verrouillage peut être activé avec l'élément de blocage (10) et peut être annulé en un état de déverrouillage
et où, dans l'état de verrouillage, la bicyclette (1) ne peut pas être déplacée, où la section d'accouplement côté bicyclette (6) est conçue pour être accouplée à une section d'accouplement côté support (11),
où le support de bicyclette fixe (2) présente une section d'accouplement (11) côté support qui est conçue pour accoupler par complémentarité de forme la section d'accouplement (6) côté bicyclette,
où l'unité d'actionnement de couplage (3) comprend un module de connexion d'actionnement de couplage (12), un actionneur (13) et un élément de verrouillage (14),
où le module de connexion d'actionnement de couplage (12) est conçu pour recevoir la commande d'état de sécurité et pour générer une commande d'actionnement à partir de la commande d'état de sécurité,
où l'actionneur (13) est relié au module de connexion d'actionnement de couplage (12) et est conçu pour recevoir une commande d'actionnement et pour actionner mécaniquement l'élément de verrouillage (14),
et où un état de couplage avec la section de couplage (6) côté bicyclette peut être établi au moyen de l'élément de verrouillage (14) et peut être supprimé en un état de découplage, **caractérisé en ce que** la serrure de cadre (5) et la section d'accouplement (6) côté bicyclette sont conçues comme deux sécurités parallèles à actionner alternativement ou cumulativement par l'unité de commande (4).

2. Dispositif antivol selon la revendication 1
est **caractérisé en ce**
**que** la serrure de cadre (5) est conçue pour établir un état de verrouillage par actionnement manuel et pour générer, en cas d'actionnement manuel, une commande d'état de sécurité avec laquelle un état de couplage peut être établi.

3. Dispositif antivol suivant les revendications 1 et 2
est **caractérisé en ce**
**que** la bicyclette (1) présente une section d'interface (15) côté bicyclette, qui est relié à l'unité de commande (4) et est conçu pour transmettre une commande d'état de sécurité,
où le support de bicyclette fixe (2) comprend une section d'interface côté support (16) qui est adaptée pour recevoir une commande d'état de sécurité de la section d'interface côté vélo
et où l'unité d'actionnement de couplage (3) est disposée sur le support de bicyclette fixe (2) et est connectée à la section d'interface côté support (16).

4. Dispositif antivol selon la revendication 3
est **caractérisé en ce**
**que** la bicyclette (1) présente une source d'énergie électrique (17) et un point de contact (18) côté bicyclette,
où le point de contact (18) côté bicyclette est relié à la source d'énergie électrique (17),
où le support de bicyclette fixe (2) présente un point de contact (19) côté support qui est relié à l'actionneur (13)
et où les points de contact sont conçus pour transmettre une énergie électrique lors d'un positionnement de la section de couplage (6) côté bicyclette sur la section de couplage (11) côté support.

5. Dispositif antivol suivant les revendications 3 ou 4
est **caractérisé en ce**
**qu'**il présente une liaison de données entre le support de bicyclette fixe (2) et la bicyclette (1), laquelle est conçue pour transmettre des données de support de bicyclette à l'unité de commande (4).

6. Dispositif antivol suivant une des revendications précédentes
est **caractérisé en ce**
**que** le support de bicyclette fixe présente un capteur d'état d'accouplement (20) avec lequel un état d'accouplement peut être détecté et transmis.
